(19) Europäisches Patentamt
European Patent Office
Office européen des brevets

(11) Publication number: **0 332 704 B1**

(12) # EUROPEAN PATENT SPECIFICATION

(45) Date of publication of patent specification: **21.12.94**

(51) Int. Cl.⁵: **C08J 5/18**, B05D 7/24, B32B 27/00

(21) Application number: **88906891.2**

(22) Date of filing: **29.07.88**

(86) International application number: **PCT/JP88/00764**

(87) International publication number: **WO 89/01008 (09.02.89 89/04)**

(54) **PROCESS FOR PRODUCING CONDUCTIVE POLYMER FILM.**

(30) Priority: **30.07.87 JP 190858/87**
**08.09.87 JP 224563/87**
**29.10.87 JP 274423/87**
**11.12.87 JP 313883/87**
**17.12.87 JP 317380/87**
**17.12.87 JP 317381/87**
**17.12.87 JP 317382/87**
**18.12.87 JP 321041/87**
**18.12.87 JP 321042/87**
**25.12.87 JP 329356/87**
**26.02.88 JP 43950/88**
**26.02.88 JP 43951/88**
**26.02.88 JP 43952/88**
**08.03.88 JP 53926/88**
**28.04.88 JP 1038/87**
**31.05.88 JP 1315/89**

(43) Date of publication of application: **20.09.89 Bulletin 89/38**

(45) Publication of the grant of the patent: **21.12.94 Bulletin 94/51**

(73) Proprietor: **NIPPON SODA CO., LTD.**
**2-1, Ohtemachi 2-chome**
**Chiyoda-ku,**
**Tokyo 100 (JP)**

(72) Inventor: **KANEKO, Takehira Odawara Research Center**
**Nippon Soda Co., Ltd.**
**345, Aza Yanagimachi**
**Takada, Odawara-shi**
**Kanagawa 250-02 (JP)**
Inventor: **SUZUKI, Hirofumi Odawara Research Center**
**Nippon Soda Co., Ltd.**
**345, Aza Yanagimachi**
**Takada, Odawara-shi**
**Kanagawa 250-02 (JP)**
Inventor: **MATSUI, Nobuo Odawara Research Center**
**Nippon Soda Co., Ltd.**
**345, Aza Yanagimachi**
**Takada, Odawara-shi**
**Kanagawa 250-02 (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 332 704 B1

(84) Designated Contracting States:
**DE FR GB IT**

(56) References cited:
**JP-A- 6 211 733**
**JP-A-61 285 216**

## Description

[Technical Field]

This invention relates to a method for the preparation of conductive polymer film, and more details, relates to a method for the preparation of homogeneous conductive polymer film by chemical polymerization of aromatic compound.

[Background Art]

It is known that polymers of aromatic compounds such as pyrroles, thiophenes and anilines are conductive. However, these polymers themselves are insoluble and infusible, being difficult to be processed to moldings as the existing polymers can be.

There are two polymerizartion methods, electropolymerization and chemical polymerization, for aromatic compounds such as pyrroles or thiophenes. The former electropolymerization allows to directly form a polymer film on the electrode. The employment of this method is however difficult as an industrial method for the preparation of conductive polymer film because of the limitations of the size (area) of the obtained film and the size of the electrode and the requirement of electrolytic reaction equipment.

The chemical polymerization, to contrast, can be carried out easily. Because of this, a large number of methods for the preparation of conductive polymer film by chemical polymerization have been proposed in recent years.

These methods include ① a method in which an oxidizing agent as a liquid phase is contacted with a heterocyclic 5-membered ring compound as a gas phase (Japanese unexamined patent publication: Tokkaisho No. 61-51026), ② a method in which a polymerisable monomer is contacted as a gas or liquid phase with a resin molding containing an oxidizing agent (Japanese unexamined patent publication: Tokkaisho No. 61-123637, No. 61-157522), ③ a method in which a solution of polymerisable monomer and a solution of oxidizing agent are mixed to immediately spray on a substrates (Japanese unexamined patent publication: Tokkaisho No. 61-285216) and & EP-A-0206133, and ④ a method in which an oxidizing agent solution and a heterocyclic 5-membered ring compound are mixed and the solution obtained after separating the precipitate from the mixture is painted or cast on a substrate (Japanese unexamined patent publication: Tokkaisho No. 62-11734, JP-A-62011733).

Out of these methods, in methods ③ and ④ using a mixture solution of polymerisable monomer and oxidizing agent, the polymerization of monomer occurs immediately. Therefore it is necessary to spray on a substrate immediately after mixed or to remove precipitate and then paint or cast on a substrate It is however difficult to obtain a homogeneous and tough film even these methods are applied.

The object of this invention is to provide a method for the preparation of homogeneous and tough conductive polymer film by chemical polymerization of aromatic compound such as pyrrole, thiophene, aniline or their derivatives.

[Disclosure of the Invention]

The object of this invention is attained by a method for the preparation of a conductive polymer film using a solution containing as component (a) an aromatic compound chosen from the group consisting of pyrrole, thiophene, aromatic amines or derivatives thereof, as component (b) an oxidizing agent and as component (c) a solvent, which is characterized in that the solution, which is homogeneous and stable for at least 100 minutes, is prepared, which contains

- component (a) ;
- as component (b) a component, chosen from the group consisting of $FeCl_3$, $CuCl_2$, $Fe(NO_3)_3$, $SbCl_5$, $MoCl_5$ or their hydrates, wherein the ratio of component (b) to component (a) is (b) : (a) = 1-10:1,
- as component (c) a compound chosen from the group consisting of aliphatic ethers, cyclic ethers, alcohols, halogenated hydrocarbons, aromatic hydrocarbons, aliphatic hydrocarbons, alicyclic hydrocarbons, esters, aliphatic or alicyclic ketones or nitro alkanes,

wherein the amount of component (c) is the amount required for dissolving the oxidizing agent to be a homogeneous solution to 50 times thereof; that the solution is applied onto a substrate; and that the solvent is removed by evaporation.

The obtained polymer film is homogeneous. The selection of a specific compound from aromatic compounds gives a film able to be handled after peeled off from the substrate. A very strong film is obtained particularly when a 3,4-asymmetrically substituted pyrrole derivative having a -COOR group (where

R is an alkyl, a benzyl or a phenyl group) either at the 3 or 4 position is used as an aromatic compound alone or by mixing with others. This invention is further described in detail in the following.

Solution Components

(1) Aromatic compounds

(Pyrrole and its derivatives)

Pyrrole, pyrrole dimer, 3,3'-dimethyl-2,2'-bipyrrole-4,4'-dicarboxylic acid distearyl ester, 3,3'-dimethyl-2,2'-bipyrrole-4,4'-dicarboxylic acid dihexyl ester, 3.3'-dimethyl-2,2'-dithiophene, 3,3'-dihexyl-2,2'-dithiophene, 4-methylpyrrole-3-carboxylic acid, 4-phenylpyrrole-3-carboxylic acid, 4-methylpyrrole-3-carboxylic acid methyl ester, 4-methylpyrrole-3-carboxylic acid ethyl ester, 4-n-propylpyrrole-3-carboxylic acid methyl ester, 4-n-propylpyrrole-3-carboxylic acid ethyl ester, pyrrole-3-carboxylic acid methyl ester, 3-methylpyrrole, 3-hexylpyrrole, pyrrole-3-carboxylic acid, 4-methylpyrrole-3-carboxylic acid hexyl ester, 4-benzylpyrrole-3-carboxylic acid methyl ester, 4-methylpyrrole-3-carboxylic acid dodecyl ester, pyrrole-3-carboxylic acid stearyl ester, 4-phenylpyrrole-3-carboxylic acid stearyl ester, 3-phenylpyrrole, 3-acetopyrrole, 3-undecylcarbonylpyrrole, 3-aminomethyl-4-methylpyrrole, 3-aminomethyl-4-phenylpyrrole, 3-acetoaminomethyl-4-phenylpyrrole, 3-benzoylpyrrole, 3-methyl-4-dimethylaminocarbamoylpyrrole, 3-methyl-4-dimethylaminomethylpyrrole, 4-methylpyrrole-3-carboxylic acid phenyl ester, 4-methylpyrrole-3-carboxylic acid benzyl ester, 4-methylpyrrole-3-carboxylic acid 4-phenylazophenyl ester, 4-methylpyrrole-3-carboxylic acid 16-bromo-2,3,5,6,8,9,11,12-octahydro-1,4,7,10,13-benzopen taoxacyclopen tadecin-15-ylmethyl ester.

Particularly, 3,4-asymmetrically substituted pyrrole derivatives having a -COOR group (where R is an alkyl, a benzyl or a phenyl group) at the 3 or 4 position such as pyrrole-3-carboxylic acid alkyl ester, 4-methylpyrrole-3-carboxylic acid alkyl ester and 4-benzylpyrrole-3-carboxylic acid alkyl ester are preferable.

(Thiophene and its derivatives)

Thiophene, alkyl substituted thiophenes such as 3-methylthiophene, 3, 4-dimethylthiophene, 3-hexylthiophene and 3-stearylthiophene, halogen substituted thiophenes such as 3-bromothiophene, and polyether substituted thiophenes such as 3-methoxydiethoxymethylthiophene,

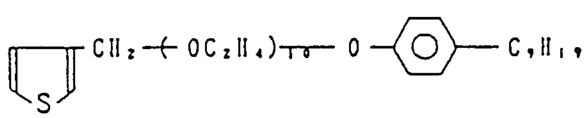

3-phenylthiophene, 3-benzylthiophene, 3-methyl-4-phenylthiophene, 2,3'-bithiophene, 2,2'-bithiophene, 2,2',2''-terthiophene. Particularly, thiophenes with substituent of an alkyl having 6 carbons or more are preferable.

(Aromatic amine and its derivatives)

Aniline, N-monosubstituted anilines (whose substituents include an alkyl, phenyl, p-aminophenyl, N-monoalkylaminophenyl N-monophenylaminophenyl and N-monophenylaminodiphenyl),substituted anilines [whose substituents include o-amino, m-amino, p-(p-aminophenoxy) p-(p-aminophenyl)], polycyclic condensed aromatic amines such as naphthylamine and perylene. These aromatic amines may have a substituent on the benzene ring. Particularly non-substituted aniline is preferable.

The said aromatic compounds can be used as a mixture with the same or different kind of compounds.

(2) Oxidizing agents

$FeCl_3$, $CuCl_2$, $Fe(NO_3)_3$, $SbCl_5$, $MoCl_5$, or their hydrates or their mixtures. Particularly $FeCl_3$, $FeCl_3 \cdot 6H_2O$ and $Fe(NO_3)_3 \cdot 9H_2O$ are preferable. The oxidizing agent is used in an amount of 1 to 10 moles, particularly 1 to 4 moles is preferable, to 1 mole of the said aromatic compound.

(3) Solvents

Aliphatic ethers such as diethylether, diisobutylether, di-n-butylether, diisopropylether and dimethoxyethane, cyclic ethers such as THF and dioxane, alcohol such as methanol, ethanol and isopropyl alcohol,

halogenated hydrocarbons such as methylene chloride and chloroform, aromatic hydrocarbons such as benzene, toluene and xylene, aliphatic hydrocarbons such as hexane and heptane, alicyclic hydrocarbons such as cyclohexane, esters such as acetic acid ethyl ester and acetic acid butyl ester, aliphatic and alicyclic ketones such as acetone, methylethylketone, methylisobutylketone and cyclohexanone, nitroalkanes such as nitromethane, or mixtures of these solvents. Particularly diethylether, methanol, THF, and mixtures of these solvents are preferable. The amount of solvent used is from an amount required for dissolving the oxidizing agent to be a homogeneous solution to a volume 50 times of this amount, particularly a volume of 10 to 30 times is preferable.

(4) Other components

① Binder

Such substances as coupling agents and polymers can be used in order to improve such conditions as adhesion of the conductive polymer film on substrates or film quality.

Silane coupling agents and titanium coupling agents can be used as coupling agents. Silane coupling agents such as $\gamma$-glycidoxypropyltrimethoxysilane $\gamma$-(methacryloxypropyl) trimethoxysilane, N-phenyl-$\gamma$-aminopropyltrimethoxysilane and $\gamma$-chloropropyltrimethoxysilane are preferably used. An amount of coupling agent added is 0.1 to 10 parts by weight to 100 parts by weight of the aromatic compound. It is not preferable if an addition amount is too small because its addition effect is not clear or if excessive because the conductivity or electrochromic property of the conductive polymer film lowers.

Polymers which dissolve in the aforementioned organic solvents and hardened by drying or heating are used as the polymer. Applicable polymers include polymethylmethacrylate (PMMA), polyvinyl chloride (PVC), polyvinyl alcohol (PVA), polystyrene (PS), polyethylene oxide (PEO) and polypropylene oxide (PPO) etc. An amount of these polymers added is 0.1 to 10 parts by weight to 100 parts of the aromatic compound. It is not preferable if the addition amount is too small because its addition effect is not clear or if excessive because the conductivity or electrochromic property of the conductive polymer film lowers. Polymer electrolytes such as polystyrene sulfonate and polyvinyl sulfonate may be added to stabilize the conductivity and to improve the mechanical performance.

② Functional materials

Materials with electric response function including quinone compounds such as benzoquinone, naphthoquinone and anthraquinone, organic metal complex compounds such as ferrocene and ruthenium dipyridyl complex, and tungsten oxide.

Materials with energy conversion function such as rhodamine B, thionine, metal-phthalocyanine, and metal-porphyrin.

Materials with metal trapping function such as crown ether, and quinoline.

Materials with oxidation-reduction ability such as enzyme.

③ Others

e.g. thickeners such as aerozyl and cellulose derivatives.

<u>Types of Substrates</u>

Concrete example, of substrates, on which the aforementioned solution of polymer substance precursor is applied, of this invention, are listed: glass plate, metal plate, polymer film, ceramic plate, glass plate coated with conductive film, fiber, paper, rod, pipe. The surface of these substrates may be treated beforehand by using such an agent as silane coupling agent.

<u>Application method of solution on substrates</u>

Applicable methods for the application of the said precursor solution on the said substrate include casting method, dipping method, spray method, ultrasonic foggeneration, and spin coating method.

Out of the above methods, the ultrasonic foggeneration and spin coating method are described below.

The ultrasonic foggeneration is a method that the said solution is foggenerated to make fine particles to disperse into a carrier gas by using ultrasonic foggenerator, the carrier gas is introduced on a substrate at

room temperature or heated beforehand so that the surface of the substrate contacts with the said fine particles of the solution, and a post heating treatment, if necessary, is carried out.

An applicable ultrasonic foggenerator is one with a structure that ultrasonic vibration is oscillated to foggenerate the said solution to be fine particles to disperse into a carrier gas. Particularly, a foggenerator capable of oscillating ultrasonic vibration of 0.5 to 3MHz is preferably used.

The spin coating method is a method that the said solution is applied on the substrate thick uniformly by using a spin coater. A spin coater capable of changing speed between 20 to 10,000 rotations per minute and with no mandrel deflection is usually used.

Method for evaporation removal of solvent

A method employed to remove the solvent is that the substrate on which the solution is applied is kept at about 0 to about 200 °C preferably room temperature to 100 °C, by using such an apparatus as drying oven or vacuum drying oven. Other methods such as that a substrate on which the solution is applied in a dust-proof hood is placed on a hot plate to heat or that the substrate is heated by using an infrared lamp may be employed.

Doping

The polymer film obtained by the said method, after washed, is doped by ordinary method in order to make the film conductive.

[Brief Description of Drawings]

Fig. 1 shows the cyclic voltammogram (hereinafter abbreviated as C.V.) of bithiophene polymer film/Pt in 0.1 mol/l TBAP (Note 1)/$CH_3CN$ electrolyte, obtained in Example 43.

Fig. 2 shows the UV-VIS spectrum of bithiophene polymer film on the ITO glass (Note 2) plate, obtained in Example 43.

a: reduction state at 300mV/SCE

b: oxidation state at 1,200mV/SCE

Fig. 3 shows the C.V. of 4-methylpyrrole-3-carboxylic acid phenyl ester (hereinafter abbreviated as MPYCP) polymer film/Pt, which traps BDP (Note 3), in 0.1 mol/l TBAP/$CH_3CN$ electrolyte, which is obtained in Example 70.

Fig. 4 shows the C.V. of BDP alone, used in Example 70.

Solid line: when Pt was used as the working electrode in the 0.1 mol/l TBAP/BDP• $CH_3CN$ electrolyte.

Dotted line: when Pt was used as the working electrode in the 0.1 mol/l TBAP/$CH_3CN$ electrolyte.

Fig. 5 shows the C.V. of 4-methylpyrrole-3-carboxylic acid methyl ester (hereinafter abbreviated as MPYCM) polymer film/Pt, which traps VO-tetrapyrazinoporphyradine ester, in the 0.1 mol/l TBAP/$CH_3CN$ electrolyte, which is obtained in Example 71.

Fig. 6 shows the C.V. of VO-tetrapyrazinoporphyradine ester/Pt in the 0.1 mol/l TBPA/$CH_3CN$ electrolyte.

(Note 1) TBAP: Tetrabutyl ammonium perchlorate

(Note 2) ITO glass: conductive glass coated with indium oxide containing tin

(Note 3) BDP: 7,14-diethyl-3,10-dimethylbenzodipteridine

[Best Mode for Carrying Out the Invention]

This invention is further described in detail by reference to the following examples. The range of this invention is not limited at all by the following examples.

(1) Pyrrole compound polymer film

Example 1

3.3g (0.02 mol) of anhydrous ferric chloride ($FeCl_3$) was dissolved in 50ml of dried diethyl ether, and the precipitate was filtrated to give a homogeneous oxidizing solution. 0.7g (0.005 mol) of 4-methylpyrrole-3-carboxylic acid methyl ester (MPYCM) was dissolved in 2ml of dried diethyl ether. The pyrrole derivative solution was added to the oxidizing solution kept at 0 °C beforehand. This solution had no deposit of

precipitates and was homogeneous.

This solution was dropped on a glass plate and air dried at ordinary temperature and atmospheric pressure, giving a reddish brown or reddish black polymer film on the glass plate. The obtained film was washed with water and then with acetone, and dried under reduced pressure for one day and night. After it, the dried film was kept under iodine vapour for doping iodine, and then measured for the conductivity by four probe method (according to Van de Pauw method, on page 218, thermodynamic electric and optical properties, KOUBUNSHIJIKKENGAKU (Polymer Experiment) 12). The film had the conductivity of 2x10 S/cm.

Examples 2 to 26 and 30

Example 1 was repeated except using the respective example conditions shown in Table 1. The results are shown in Table 1.

Examples 27 and 28

The homogeneous mixture solution obtained in Example 1 was dipped in (Example 27) or sprayed on (Example 28) a qualitative filter paper, and then the solvent was air dried to give a polymer film. The results are shown in Table 1.

Example 29

1.02g (0.013 mol) of anhydrous ferric chloride ($FeCl_3$) was added to dissolve in 50ml of dried methanol. To this solution was added 0.52g (0.0025 mol) of 4-hexylpyrrole-3-carboxylic acid methyl ester (hereinafter abbreviated as HPYCM) to stir to dissolve for an hour. This solution had no deposit of precipitates and was homogeneous.

This solution was foggenerated to be fine particles to disperse in the carrier gas of nitrogen (introducing speed: 3 ℓ/min) by using a ultrasonic foggenerator. The carrier gas containing the fine particles consisting of the said components was introduced into a hood covering 3 soda lime glass plates (30mm x 60mm) and a soda lime glass plate whose surface was treated by coating with a silane coupling agent (KBM-403, Shin-Etsu Chemical Co.,Ltd.) (30mm x 60mm) at room temperature for 30 minutes, so that the fine particles of the sample were deposited on the plates. After it the plates were kept heating at 50°C for 30 minutes under the atmosphere of nitrogen gas for the post heating treatment.

The obtained plates on which the polymer film was formed were washed twice with methanol, dried at room temperature under reduced pressure, and then doped with iodine.

A cellophane tape peal test was carried out for the obtained polymer films according to the JIS paint testing method, with the results showing that the film had excellent adhesion. The film formed on the soda lime glass plate treated with silane coupling agent particularly exhibited more excellent adhesion.

The obtained polymer films were measured for the conductivity by four probe method.

Example 31

Example 29 was repeated except that 4-methylpyrrole-3-carboxylic acid stearyl ester (hereinafter abbreviated as MPYCS) was used as a pyrrole derivative and THF as a solvent.

Comparative Example 1

5ml of 10% by weight ethanol solution of pyrrole and 5ml of 10% by weight aqueous solution of $Na_2S_2O_8$ were mixed, resulting in deposition of $Na_2S_2O_8$ as white colloid. Black precipitate was formed around the colloid. This mixture solution was applied on a substrate to dry at 60 °C. The results are shown in Table 1.

Comparative Example 2

5ml of 10% by weight ethanol solution of pyrrole and 5ml of 10% by weight aqueous solution of $FeCl_3$ were mixed, and immediately black precipitate was formed. This mixture solution was applied on a substrate to dry at 60 °C. The results are shown in Table 1.

Comparative Example 3

Mixing of 5ml of 10% by weight THF solution of pyrrole and 5ml of 10% by weight aqueous solution of $FeCl_3$ resulted in separating into 2 layers. This mixture solution was applied on a substrate to dry at 60 °C. The results are shown in Table 1.

Comparative Example 4

Mixing of 5ml of 10% by weight DMSO solution of pyrrole and 5ml of 10% by weight aqueous solution of $FeCl_3$ resulted in separating into 2 layers. This mixture solution was applied on a substrate, giving no film. The results are shown in Table 1.

Comparative Example 5

A solution of which 10g (0.04 mol) of $FeCl_3 \cdot 6H_2O$ was dissolved in 40ml of methanol was added to a solution of which 4ml (0.06 mol) of pyrrole was dissolved in 40ml of methanol, and the mixture was stirred. After a minute, precipitation started. After about an hour, the mixture solution was filtrated to remove the precipitate, the filtrate was applied on a glass plate, then the solvent was evaporated to remove. The results are shown in Table 1.

Comparative Example 6

3.3g (0.02 mol) of anhydrous ferric chloride ($FeCl_3$) was dissolved in 50ml of dried diethyl ether to use as an oxidizing solution. 0.7g (0.005 mol) of 4-methylpyrrole-3-carboxylic acid methyl ester (MPYCM) was dissolved in 2ml of diethyl ether. This solution and the oxidizing solution were placed in a three neck flask with a thermometer, a condenser and a calcium chloride tube, and reacted at room temperature (25 °C). The reaction progress was checked by using a thin layer plate (TLC) until the monomer disappeared. It took 72 hours for the disappearance of monomer. The deposited precipitate was filtrated, and sufficiently washed each with $H_2O$, 0.5N-HCl and $H_2O$ in this order, giving 0.5g of black polymer substance. (Yield: 71.4%) The polymer substance was dried in a desiccator under reduced pressure for a day and night, and measured as a tablet sample of 1cm in diameter for the conductivity. The result was $2x10^{-2}$S/cm.

Comparative Example 7

0.684g (0.1 mol/l) of tetra-n-butyl ammonium perchlorate (TBAP) was dissolved in 20ml of acetonitrile, and 0.278g (0.1 mol/l) of 4-methylpyrrole-3-carboxylic acid methyl ester (MPYCM) was dissolved to use as an electrolyte. The electrolyte was placed in an electrolytic cell with platinum plates as the two electrodes, degased by passing $N_2$ gas through, and applied electricity. The film electrodeposited on the anode was well washed with pure acetonitrile, dried under reduced pressure, and measured for the conductivity. The result was 3.9 S/cm.

Table 1. Pyrrole Compound Polymer Film

| Example | Monomer | | Solvent | | Oxidizing agent | | *1 Solvent | Solvent removing method | Film characteristic | |
|---|---|---|---|---|---|---|---|---|---|---|
| | Compound | Q'ty (mol) | Compound | Q'ty (mℓ) | Compound | Q'ty (mol) | Stability | | *2 Property | Conductivity (S/cm) |
| 1 | 4-methylpyrrole-3-carboxylic acid methyl ester | 0.005 | diethyl ether | 50 | $FeCl_3$ | 0.02 | ≧100 min | Ordinary temp and pressure | ○ | $2\times10$ |
| 2 | 〃 | 〃 | diethyl ether +methanol | 48.5<br>1.5 | 〃 | 〃 | ≧2 days | 〃 | ○ | 4.2 |
| 3 | 〃 | 〃 | dimethoxyethan | 50 | 〃 | 〃 | ≧100 min | 〃 | ○ | 1.0 |
| 4 | 4-methylpyrrole-3-carboxylic acid | 〃 | diethyl ether | 〃 | 〃 | 〃 | 〃 | Ordinary temp, reduced pressure | ○ | $2.0\times10^{-1}$ |
| 5 | 4-methylpyrrole-3-carboxylic acid methyl ester | 〃 | dimethoxyethan +methanol | 100<br>40 | $Fe(NO_3)_3\cdot9H_2O$ | 〃 | 〃 | Ordinary temp and pressure | ○ | $5.5\times10^{-1}$ |
| 6 | pyrrole | 〃 | methanol +THF | 40<br>10 | $FeCl_3$ | 〃 | ≧2 days | 〃 | △ | $5.0\times10^{-2}$ |
| 7 | 4-benzylpyrrole-3-carboxylic acid methyl ester | 0.001 | diethyl ether | 10 | 〃 | 0.003 | ≧100 min | Hot plate (40℃) | ◎ | $6.3\times10^{-2}$ |
| 8 | 3-hexylpyrrole | 〃 | 〃 | 〃 | $FeCl_3\cdot6H_2O$ | 〃 | 〃 | 〃 | ○ | $2.3\times10^{-4}$ |
| 9 | 4-methylpyrrol-3-carboxylic acid hexyl ester | 〃 | 〃 | 〃 | $FeCl_3$ | 〃 | 〃 | 〃 | ◎ | 6.5 |
| 10 | 〃 | 〃 | THF | 〃 | 〃 | 〃 | ≧2 days | 〃 | ○ | $3.6\times10^{-1}$ |
| 11 | 4-methylpyrrol-3- carboxylic acid dodecyl ester | 〃 | diethyl ether | 〃 | 〃 | 〃 | 〃 | Ordinary temp and pressure | ○ | $9\times10^{-1}$ |
| 12 | pyrrole-3-carboxlic acid | 〃 | methanol | 〃 | 〃 | 〃 | 〃 | Hot plate (50℃) | ○ | $1.7\times10^{-2}$ |
| 13 | pyrrole-3-carboxlic acid stearyl ester | 〃 | diethyl ether | 〃 | 〃 | 〃 | ≧2 days | Hot plate (40℃) | ○ | $2.6\times10^{-4}$ |
| 14 | 4-phenylpyrrole-3-carboxylic acid stearyl ester | 〃 | 〃 | 〃 | 〃 | 〃 | ≧100 min | 〃 | ○ | $3.9\times10^{-1}$ |
| 15 | 3-undecylcarbonylpyrrole | 〃 | 〃 | 〃 | 〃 | 〃 | 〃 | 〃 | ○ | $1.6\times10^{-4}$ |

Table 1.

(to be cont'd)

| Example | Monomer | | Solvent | | Oxidizing agent | | *1 Solvent | Solvent removing method | Film characteristic | |
|---|---|---|---|---|---|---|---|---|---|---|
| | Compound | Q'ty (mol) | Compound | Q'ty (mℓ) | Compound | Q'ty (mol) | Stability | | *2 Property | Conductivity (S/cm) |
| 16 | 3-acetopyrrole | 〃 | 〃 | 〃 | 〃 | 〃 | 〃 | 〃 | ○ | $2\times10^{-1}$ |
| 17 | 3-aminomethyl-4-methylpyrrole | 〃 | methanol | 〃 | 〃 | 〃 | 〃 | 〃 | △ | $1.6\times10^{-4}$ |
| 18 | 3-aminomethyl-4-phenylpyrrole | 〃 | 〃 | 〃 | 〃 | 〃 | 〃 | 〃 | △ | $6.6\times10^{-5}$ |
| 19 | 3-acetoaminomethyl-4-phenyl-pyrrole | 〃 | 〃 | 〃 | 〃 | 〃 | 〃 | 〃 | △ | $1.5\times10^{-3}$ |
| 20 | 3-benzoylpyrrole | 〃 | diethyl ether | | 〃 | 〃 | 〃 | 〃 | △ | $9.2\times10^{-4}$ |
| 21 | 3-methyl-4-dimethylamino-carbamoylpyrrole | 〃 | 〃 | 〃 | 〃 | 〃 | 〃 | 〃 | ○ | $3.7\times10^{-4}$ |
| 22 | 3-methyl-4-dimethylamino-methylpyrrole | 〃 | 〃 | 〃 | 〃 | 〃 | 〃 | 〃 | △ | $2.6\times10^{-5}$ |
| 23 | 3-phenylpyrrole | 〃 | THF | 〃 | $FeCl_3\cdot6H_2O$ | 〃 | 〃 | 〃 | △ | $4.7\times10^{-5}$ |
| 24 | 3-benzylpyrrole | 〃 | 〃 | 〃 | $FeCl_3$ | 〃 | 〃 | 〃 | △ | $1.6\times10^{-4}$ |
| 25 | 4-methylpyrrole-3-carboxylic acid phenyl ester | 〃 | diethyl ether | 〃 | 〃 | 〃 | 〃 | Ordinary temp and pressure | ○ | $4.2\times10^{-1}$ |
| 26 | 4-methylpyrrole-3-carboxylic acid benzyl ester | 〃 | 〃 | 〃 | 〃 | 〃 | 〃 | 〃 | ◎ | 2.9 |
| 27 | 4-methylpyrrole-3-carboxylic acid methyl ester | 0.005 | 〃 | 50 | 〃 | 0.02 | 〃 | 〃 | ○ | $1.0\times10^{-1}$ |
| 28 | 〃 | 〃 | 〃 | 〃 | 〃 | 〃 | 〃 | 〃 | ○ | $1.0\times10^{-2}$ |
| 29 | 4-hexylpyrrole-3-carboxylic acid methyl ester | 0.0025 | methanol | 〃 | 〃 | 0.006 | 〃 | $N_2$ gas, 50℃ | ◎ | $2.2\times10^{-3}$ |
| 30 | 〃 | 〃 | THF | 〃 | 〃 | 〃 | ≧ 2 days | Hot plate (40℃) | ○ | ——— |

(to be cont'd)

Table 1.

| Example | Monomer | | Solvent | | Oxidizing agent | | *1 Solvent | Solvent removing method | Film characteristic | |
|---|---|---|---|---|---|---|---|---|---|---|
| | Compound | Q'ty (mol) | Compound | Q'ty (mℓ) | Compound | Q'ty (mol) | Stability | | *2 Property | Conductivity (S/cm) |
| 31 | 4-methylpyrrole-3-carboxylic acid stearyl ester | 〃 | 〃 | 〃 | 〃 | 〃 | ≧100 min | $N_2$gas, 50℃ | ○ | $5.4 \times 10^{-2}$ |
| Comparative 1 | pyrrole | 0.007 | ethanol | 5 | $Na_2S_2O_8$ | 0.002 | Precipitate | 60 ℃ | × | —— |
| 〃 2 | 〃 | 〃 | 〃 | 〃 | $FeCl_3$ | 0.003 | 〃 | 〃 | × | —— |
| 〃 3 | 〃 | 〃 | THF | 〃 | 〃 | 〃 | Separate to 2 layers | 〃 | × | —— |
| 〃 4 | 〃 | 〃 | DMSO | 〃 | 〃 | 〃 | 〃 | 〃 | × | —— |
| 〃 5 | 〃 | 0.06 | methanol | 80 | $FeCl_3 \cdot 6H_2O$ | 0.04 | Precipitate | Ordinary temp and pressure | △ | —— |

*1 Solvent stability

"≧100 min" and "≧2 days" mean that no precipitation occurs at least in 100 minutes and in 2 days, respectively, after each pertinent monomer, oxidizing agent and solvent are mixed.

*2 Film property

◎ : Homogeneous film with self retentivity and high strength.

○ : Homogeneous film with self retentivity.

△ : Homogeneous film.

× : No film is obtained, or non-homogeneous film even if obtained.

(2) Thiophene Compound Polymer Film

Example 32

1.62g (0.01 moles) of anhydrous ferric chloride ($FeCl_3$) was dissolved in 50ml of dried diethyl ether to use as an oxidizing solution. To this oxidizing solution kept at 0°C, was added 0.5g (0.005 mol) of 3-methythiophene. The resulting solution had no deposit of precipitates and was homogeneous.

This solution was cast on a glass plate and heated at 60 °C under reduced pressure of 30mmHg. A black film was obtained on the glass plate. The obtained film was washed with water and then with acetone, and after it, dried in a vacuum desiccator for a day and night, doped with iodine by keeping under iodine vapour, and then measured for the conductivity by the four probe method to give the result of 9.0 x 10° S/cm.

The said homogeneous mixture solution was cast on a platinum plate, and the same procedure was repeated. The obtained film was measured for cyclic voltammograms (C.V.) in 0.1 mol/l of tetrabutyl ammonium perchlorate (TBAP) / acetonitrile according to an ordinary method. The film had the anode peak voltage at 800mV (versus KCl saturated calomel electrode) and the cathode peak voltage at 640mV (versus KCl saturated calomel electrode), and showed a reversible electric response. Simultaneously the film on the platinum plate changed its color, dark blue in the oxidation state and red in the reduction state, and had stable and reversible electrochromism characteristics.

Examples 33 to 45

Example 32 was repeated except using the respective example conditions shown in Table 2. The results are shown in Table 2.

In Example 43 the following test was performed.

The homogeneous mixture solution was poured onto a platinum plate used as a substrate, the solvent was evaporated at room temperature. A blue polymer substance was formed on the substrate simultaneously with the evaporation of the solvent. After it, the formed substance was washed with water and then with methanol, and dried. The platinum plate with the bithiophene polymer polymerized on the platinum was placed as a working electrode in 0.1 mol/l of TBAP (tetrabutyl ammonium perchlorate)/$CH_3CN$, and, with a Pt wire of counter electrode and KCl saturated calomel reference electrode (SCE), was degased by $N_2$ gas stream. A cyclic voltammogram (3 electrode method) was measured. The polymer substance had a stable electric response as shown in Fig. 1.

The homogeneous mixture solution was poured onto an ITO glass plate used as a substrate and polymer substance was formed on the ITO glass plate. This ITO glass modification electrode was attached to a UV quartz cell and measured in the said electrolyte by 3 electrode method. As a result, a clear color change was observed in the oxidation state (blue) and in the reduction state (orange). The spectrum of visible rays is shown in Fig. 2.

Examples 46 to 48

Example 29 was repeated except using the respective example conditions shown in Table 2. The results are shown in Table 2.

(3) Aromatic Amine Polymer Film

Example 49

0.5g (0.005 mol) of light yellow aniline obtained by that commercially available aniline was distilled to purify was added to a solution of which 2.62g (0.016 mol) of anhydrous ferric chloride ($FeCl_3$) was dissolved in 30ml of methanol and which was used as an oxidising solution. The resulting solution immediately became reddish black and homogeneous.

This mixture solution was cast onto a glass plate, and heated to 60 to 80°C. A black or dark blue film was formed on the glass plate.

The film was washed with distilled water and then with acetone, and dried in a desiccator under reduced pressure for a day and night. The dried film was measured by the four probe method for the conductivity. The result was 2.4 S/cm.

Examples 50 to 52

Example 49 was repeated except using the respective example conditions shown in Table 2. The results are shown in Table 2.

Example 53

8.1g of anhydrous ferric chloride ($FeCl_3$) was dissolved in 100ml of THF. To the resulting solution was added 4.6g of aniline with stirring to prepare a dark brown precursor solution.

On a glass plate of 100mm x 100mm x 1.3mm, was applied with brush beforehand a methanol solution containing 1% by weight of $\gamma$-glycidoxypropyl trimethoxysilane (silane coupling agent: trade name KBM-403, Shin-Etsu Chemical Co., Ltd.) and 1% by weight of water. The glass base plate was air dried, and fixed on the center on a spin coater. The precursor solution prepared above was dropped by using a dropping pipet on the central part of the substrate while the coater was kept rotating at a rotation speed of 260rpm. Then the spin coater was speeded up to the number of rotations of 720rpm and rotated for another 40 seconds for the formation of homogeneous film of precursor solution on the substrate.

Then the substrate was placed in a drying oven at a temperature of 70 °C for 30 minutes in order to evaporate to remove the solvent of THF. An aniline polymer film was thus formed on the plate.

The formed aniline polymer film was washed with methanol and dried at ordinary temperature under reduced pressure, giving a conductive polymer film. The results are shown in Table 2.

Comparative Example 8

1.86g of aniline and 5ml of 12N aqueous hydrochloric acid solution were dissolved in 100ml of water to place in a 500ml conical beaker. Into the beaker heated to 40 °C, a solution of which 4.97g of ammonium peroxydisulfate was dissolved in 200ml of water was added over 1.5 hours with stirring.

The precipitate formed due to the reaction was filtrated, and washed with water, with 2N aqueous hydrochloric acid solution and furthermore with methanol, and dried at ordinary temperature under reduced pressure. 1.58g of blackish green aniline polymer of fine powder was obtained.

To the obtained aniline polymer placed in a 100ml ball mill were added 30ml of acetic acid amyl ester and 0.1g of the aforementioned silane coupling agent to wet pulverize for 30 hours, and then THF was further added to dilute 10 times to prepare a slurry for the formation of conductive polymer film.

This slurry was used to spin coat a glass substrate under the same conditions as those used in Example 53, and dried at 70 °C. The result was no formation of conductive polymer film because the aniline polymer did not adhere on the substrate and moved up as powder.

Table 2. Thiophene Compound and Aromatic Amine Polymer Film

| Example | Monomer Compound | Monomer Q'ty (mol) | Solvent Compound | Solvent Q'ty (mℓ) | Oxidizing agent Compound | Oxidizing agent Q'ty (mol) | Solvent Stability | Solvent removing method | Film characteristic Property | Film characteristic Conductivity (S/cm) |
|---|---|---|---|---|---|---|---|---|---|---|
| 32 | 3-methylthiophene | 0.005 | diethyl ether | 50 | $FeCl_3$ | 0.01 | ≧2 days | Reduced pressure, 60°C | △ | 9.0 |
| 33 | 3-methoxydiethoxymethyl-thiophene | 〃 | methanol | 33 | 〃 | 〃 | 〃 | Hot plate (50°C) | ○ | $8.7 \times 10^{-3}$ |
| 34 | 3-bromothiophene | 〃 | 〃 | 50 | 〃 | 0.015 | ≧100 min | 〃 | ○ | $3.4 \times 10^{-4}$ |
| 35 | 3-phenylthiophene | 0.001 | diethyl ether | 10 | 〃 | 0.003 | 〃 | Hot plate (50°C) | △ | $1.6 \times 10^{-1}$ |
| 36 | 3-benzylthiophene | 〃 | 〃 | 〃 | 〃 | 〃 | 〃 | 〃 | ○ | $1.0 \times 10^{-3}$ |
| 37 | 3-(4-methylpnenyl)thiophene | 〃 | 〃 | 〃 | 〃 | 〃 | 〃 | 〃 | △ | $4.9 \times 10^{-2}$ |
| 38 | 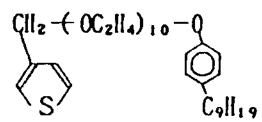 | 〃 | methanol | 〃 | 〃 | 〃 | 〃 | Hot plate (220°C) | △ | $1.2 \times 10^{-6}$ |
| 39 | 3,4-dimethylthiophene | 0.005 | diethyl ether | 50 | 〃 | 0.01 | 〃 | Hot plate (50°C) | △ | $3.0 \times 10^{-3}$ |
| 40 | 3-hexylthiophene | 〃 | 〃 | 〃 | 〃 | 〃 | 〃 | 〃 | ○ | $5 \times 10^{-1}$ |
| 41 | 3-stearylthiophene | 0.003 | 〃 | 〃 | 〃 | 〃 | ≧2 days | 〃 | ○ | 1.6 |
| 42 | 2,3'-bithiophene | 0.001 | 〃 | 10 | 〃 | 0.003 | ≧100 min | 〃 | △ | $1.6 \times 10^{-1}$ |
| 43 | 2,3'-bithiophene | 〃 | 〃 | 〃 | 〃 | 〃 | 〃 | Room temp | △ | $1.0 \times 10^{-1}$ |
| 44 | 〃 | 〃 | diethyl ether + methanol | 9.5<br>0.5 | 〃 | 〃 | ≧2 days | 〃 | △ | 3.7 |
| 45 | 2,2,'2''- terthiophene | 〃 | THF | 〃 | 〃 | 〃 | ≧100 min | 〃 | △ | $1.0 \times 10^{-2}$ |

(to be cont'd)

Table 2.

| Example | Monomer Compound | Monomer Q'ty (mol) | Solvent Compound | Solvent Q'ty (mℓ) | Oxidizing agent Compound | Oxidizing agent Q'ty (mol) | Solvent Stability | Solvent removing method | Film characteristic Property | Film characteristic Conductivity (S/cm) |
|---|---|---|---|---|---|---|---|---|---|---|
| 46 | 4-hexylthiophene | 0.0025 | 〃 | 50 | 〃 | 0.006 | 〃 | $N_2$gas, 50℃ | △ | $5 \times 10^{-1}$ |
| 47 | 3-ethylthiophene | 0.005 | diethyl ether | 〃 | 〃 | 0.02 | 〃 | Hot plate (50℃) | △ | 3.1 |
| 48 | 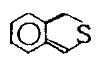 | 〃 | 〃 | 〃 | 〃 | 〃 | 〃 | 〃 | △ | $9.2 \times 10^{-3}$ |
| 49 | aniline | 〃 | methanol | 30 | 〃 | 0.016 | 〃 | 60~80℃ | △ | 2.4 |
| 50 | m-toluidine | 0.01 | THF | 55 | 〃 | 0.022 | 〃 | 〃 | △ | $1.0 \times 10^{-2}$ |
| 51 | 2-aminoanthracene | 0.001 | 〃 | 10 | 〃 | 0.003 | 〃 | Room temp | △ | $3.8 \times 10^{-3}$ |
| 52 | p-aminodiphenylamine | 〃 | 〃 | 〃 | 〃 | 〃 | 〃 | 〃 | △ | $1.4 \times 10^{-3}$ |
| 53 | aniline | 1.05 | 〃 | 100 | 〃 | 0.05 | 〃 | 70℃ | △ | $7.4 \times 10^{-5}$ |

(4) Copolymer Film

Examples 54 to 63

0.833 m mol of

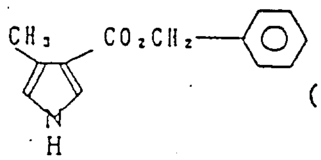

( I ) or

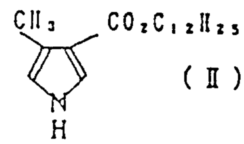

( II )

and 0.167 m mol of each pyrrole derivative, thiophene derivative or aniline shown in Table 3 were dissolved in 2 ml of diethyl ether. Into the resulting solution was added a solution of which 0.488g of $FeCl_3$ -(monomer/$FeCl_3$ = 1/3 molar ratio) was dissolved in 10ml of diethyl ether. Any of the obtained solutions had no deposit of precipitates in 100 minutes or more and was homogeneous. The solution was poured onto a glass plate and dried on a hot plate in air from room temperature to 100 °C. Any of films obtained was homogeneous and had self-retentivity. The obtained film was washed with water and with acetone, dried, doped with iodine by keeping it under iodine a vapor, and measured for the conductivity. However, methanol was used instead of diethyl ether as a solvent when aniline was employed.

The results are shown in Table 3.

Table 3 ( Values shown are conductivity in S/cm.)

| | 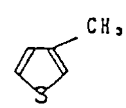 | 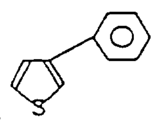 | 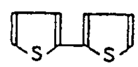 | 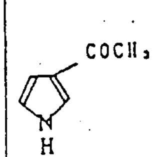 | 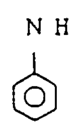 |
|---|---|---|---|---|---|
| (I) | $4.8 \times 10^{-1}$ | 4.4 | 2.0 | $7.4 \times 10^{-1}$ | 1.4 |
| (II) | $6.2 \times 10^{-1}$ | $0.5 \times 10^{-1}$ | $1.1 \times 10^{-1}$ | $6.3 \times 10^{-1}$ | $3.8 \times 10^{-1}$ |

(5) Polymer Film with Binder Added

Example 64

Example 49 was repeated except that THF was used as a solvent instead of methanol, and 5g of a solution of which 0.1g of polyvinyl chloride (PVC polymerization degree: about 1000) was dissolved in 10g of THF was added.

This polyvinyl chloride mixture solution was applied on a glass plate. The plate was treated in the same manner as that used in Example 49. The complex film had the conductivity of $4.3 \times 10^{-2}$ S/cm.

Examples 65 to 69

Example 64 was repeated except using the respective example conditions shown in Table 4. The results are shown in Table 4.

Table 4. Film Containing Binder

| Example | Monomer Compound | Monomer Q'ty (mol) | Solvent Compound | Solvent Q'ty (mℓ) | FeCl$_3$ (mol) | Binder Compound | Binder Q'ty (g) | Solvent Stability | Application method of solvent to substrate | Film conductivity (S/cm) |
|---|---|---|---|---|---|---|---|---|---|---|
| 64 | aniline | 0.005 | THF | 30 | 0.016 | PVC | 0.1 | ≥100 min | casting | $4.3\times10^{-2}$ |
| 65 | aniline | 0.025 | 〃 | 100 | 0.05 | PMMA | 0.2 | 〃 | spin coating | $3.5\times10^{-5}$ |
| 66 | aniline | 0.005 | 〃 | 100 | 0.01 | silanecoupling agent | 0.04 | 〃 | 〃 | $2.7\times10^{-2}$ |
| 67 | 4-methylpyrrole-3-carboxylic acid methyl ester | 0.005 | methanol | 70 | 0.01 | PEG | 0.3 | 〃 | ultrasonic foggeneration | $5.0\times10^{-1}$ |
| 68 | 3-methylthiophene | 0.01 | THF | 100 | 0.025 | PMMA | 0.05 | 〃 | 〃 | $1.7\times10^{-2}$ |
| 69 | aniline | 0.01 | acetic acid ethyl ester | 80 | 0.03 | polystyrene | 0.1 | 〃 | 〃 | 2.3 |

(6) Polymer Film with Functional Material Added

Example 70

0.486g (0.003 mol) of anhydrous ferric chloride ($FeCl_3$) was dissolved in 10ml of dried diethyl ether, and the insoluble matter was filtrated to make a homogeneous oxidizing solution. A solution of which 0.201g of 4-methylpyrrole-3-carboxylic acid phenyl ester (MPYCP) was dissolved in 2ml of methanol was added to the obtained oxidizing solution. In addition, 10mg of BDP was added to mix and disperse. This solution was cast on a platinum plate to form a functional electrode with BDP trapped.

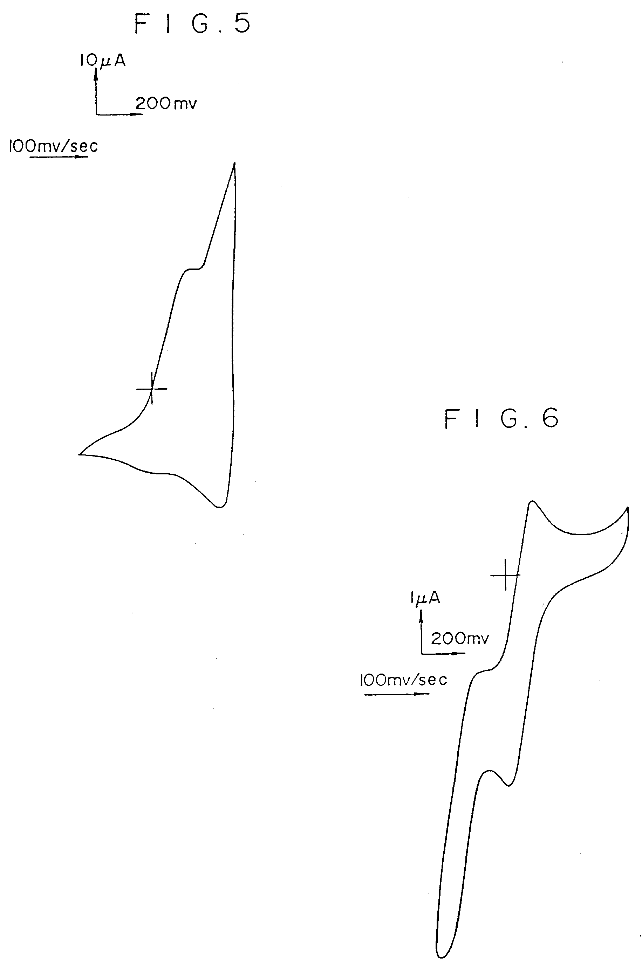

The C.V. of this electrode is shown in Fig. 3. The C.V. of BDP alone is shown in Fig. 4.

As shown in the figures, the BDP functional electrode exhibited the electric response of BDP in the polymer matrix.

Example 71

Example 1 was repeated to prepare a homogeneous cast solution except that 0.139g of 4-methylpyrrole-3-carboxylic acid methyl ester (MPYCM) was used instead of the pyrrole derivative used. Into the cast solution, 10mg of VO-tetrapyrazinoporphyradine ester (note) was mixed and dispersed. This cast solution was cast on a platinum plate to form a complex functional electrode.

The C.V. of this electrode is shown in fig. 5. The C.V. of VO-tetrapyrazinoporphyradine ester alone is shown in Fig. 6.

An electric response of VO-tetrapyrazinoporphyradine was observed in the polymer matrix, as seen from the figures.

(Note) VO-tetrapyrazinoporphyradine ester: 29H, 31H, tetrapyradino (2,3-b:2',3'-g:2'',3''-ℓ:2''', 3'''-g) porphyradine-2,3,9,10,16,17,23,24-octacarboxylic acid octyl ester-VO complex

(7) Measurement of Polymer Film Mechanical Strength

The film tensile strength at break was measured for the films after washed and iodine-doped films which were obtained in the said Example 7 (4-benzylpyrrole-3-carboxylic acid methyl ester), Example 9 (4-methylpyrrole-3-carboxylic acid hexyl ester), Example 26 (4-methylpyrrole-3-carboxylic acid benzyl ester) and Example 29 (4-hexylpyrrole-3-carboxylic acid methyl ester), by using a tensile tester TENSILON UTM-1 Type 5000 (ORIENTEC CORP).

Each of the said films was cut to a size (thickness x width x length) of 20 to 100 μm x 10mm x 30mm, and set in the tensile tester with 15mm of distance between chucks. A tensile test was carried out at a cross head speed of 300mm/min at temperature of 20 °C. In all cases, 3 or more measurement results were averaged to give as the measured value.

| Example | Film after washed MPa | Iodine-doped film MPa |
|---|---|---|
| 7 | 7.4 (74 $kg/cm^2$) | 6.5 (65 $kg/cm^2$) |
| 9 | 11.2 (112 ) | 5.5 (55 ) |
| 26 | 1.1 (11 ) | 1.3 (13 ) |
| 29 | 6.2 (62 ) | 4.3 (43 ) |

[Industrial Applicability]

As shown in the examples of this invention, in the method for the preparation of conductive polymer film, a selection of a combination of an aromatic compounds of polymerisable monomer, oxidizing agents and solvents allowed to give a polymer precursor solution having no precipitate in at least 100 minutes and remaining stable in a homogeneous state. As the result, a homogeneous polymer film was obtained when the solution was applied on a substrate. A polymer film possible to have self-retentivity, that is, possible to handle after peeled off from the substrate, was obtained by the use of a specific compound selected from aromatic compounds. A polymer film with particularly large tensile strength was obtained particularly when a 3,4-asymmetrically substituted pyrrole derivatives having a -COOR group at the 3 or 4 position was used as an aromatic compound.

The conductive polymer films produced by this invention, thanks to the possession of the said outstanding effects, are useful as corrosion priventive materials for metal surfaces, coating materials to prevent oxidation deterioration of semiconductors, transparent electrodes by coating the film on such a transparent material as glass plate or polymer film, or electrochromic materials, switching components, galvanic cells, capacitors, or dielectrics.

Compounding of conductive polymer and functional molecule by this invention, when compared with the electrochemical method, needs no complex conditions nor requires the modification of an expensive material with an anionic group. A functionalized conductive polymer can be easily obtained on a various types of substrates or as a film possible to have self-retentivity.

It is possible to introduce a functional molecule into a matrix, regardless of the oxidation potential of conductive polymer matrix. The possibility of introduction of useful functional molecule without exposing to unnecessary high voltage causes less deactivation and decomposition of the functional molecule. The method of this invention is thus useful as a means to easily obtain a functionalized conductive film or to simply make a functionalized polymer matrix a film.

These are expected to have a very wide variety of applications such as electronic devices, light-energy conversion, separation membrane or biopolymer catalyst.

**Claims**

**1.** A method for the preparation of a conductive polymer film using a solution containing as component (a) aromatic compound chosen from the group consisting of pyrrole, thiophene, aromatic amines or derivatives thereof, as component (b) an oxidizing agent and as component (c) a solvent, characterized in that the solution, which is homogeneous and stable for at least 100 minutes, is prepared, which contains

- component (a);
- as component (b) a component, chosen from the group consisting of $FeCl_3$, $CuCl_2$, $Fe(NO_3)_3$, $SbCl_5$, $MoCl_5$ or their hydrates, wherein the molar ratio of component (b) to component (a) is (b):-(a) = 1-10:1,
- as component (c) a compound chosen from the group consisting of aliphatic ethers, cyclic ethers, alcohols, halogenated hydrocarbons, aromatic hydrocarbons, aliphatic hydrocarbons, alicyclic hydrocarbons, esters, aliphatic or alicyclic ketones or nitro alkanes,

wherein the amount of component (c) is the amount required for dissolving the oxidizing agent to be a homogeneous solution to 50 times thereof;
that the solution is applied onto a substrate;
and that the solvent is removed by evaporation.

**Patentansprüche**

**1.** Verfahren zur Herstellung eines leitfähigen Polymerfilms unter Verwendung einer Lösung, enthaltend als Komponente (a) eine aromatische Verbindung, ausgewählt aus der Gruppe bestehend aus Pyrrol, Thiophen, aromatischen Aminen oder Derivaten davon, als Komponente (b) ein oxidierendes Mittel und als Komponente (c) ein Lösungsmittel, dadurch gekennzeichnet, daß die Lösung, die während mindestens 100 min. homogen und stabil ist, hergestellt wird, enthaltend

- Komponente (a);
- als Komponente (b) eine Komponente, ausgewählt aus der Gruppe bestehend aus $FeCl_3$, $CuCl_2$, $Fe(NO_3)_3$, $SbCl_5$, $MoCl_5$ oder deren Hydraten, wobei das Molverhältnis von Komponente (b) zu Komponente (a) (b):(a) = 1-10:1 ist,

- als Komponente (c) eine Verbindung, ausgewählt aus der Gruppe bestehend als aliphatischen Ethern, cyclischen Ethern, Alkoholen, halogenierten Kohlenwasserstoffen, aromatischen Kohlenwasserstoffen, aliphatischen Kohlenwasserstoffen, alicyclischen Kohlenwasserstoffen, Estern, aliphatischen oder alicyclischen Ketonen oder Nitroalkanen,

wobei die Menge an Komponente (c) die Menge ist, die erforderlich ist, um das oxidierende Mittel unter Bildung einer homogenen Lösung zu lösen bis zu dem 50-fachen davon;
daß die Lösung auf ein Substrat aufgebracht wird;
und daß das Lösungsmittel abgedampft wird.

## Revendications

**1.** Méthode de préparation d'un film polymère conducteur en utilisant une solution contenant comme composant (a) un composé aromatique choisi dans le groupe consistant en pyrrole, thiophène, amines aromatiques ou leurs dérivés, comme composant (b), un agent oxydant et comme composant (c), un solvant, caractérisée en ce que la solution, qui est homogène et stable pendant au moins 100 minutes est préparée, laquelle contient

- le composant (a) ;
- comme composant (b), un composant choisi dans le groupe consistant en $FeCl_3$, $CuCl_2$, $Fe(NO_3)_3$, $SbCl_5$, $MoCl_5$ ou leurs hydrates, où le rapport molaire du composant (b) au composant (a) est (b) : (a) = 1-10:1,
- comme composant (c), un composé choisi dans le groupe consistant en éthers aliphatiques, éthers cycliques, alcools, hydrocarbures halogénés, hydrocarbures aromatiques, hydrocarbures aliphatiques, hydrocarbures alicycliques, esters, cétones aliphatiques ou alicycliques ou nitro alcanes,

où la quantité du composant (c) est la quantité requise pour dissoudre l'agent oxydant pour que ce soit une solution homogène jusqu'à 50 fois ;
en ce que la solution est appliquée sur un substrat ;
et en ce que le solvant est éliminé par évaporation.

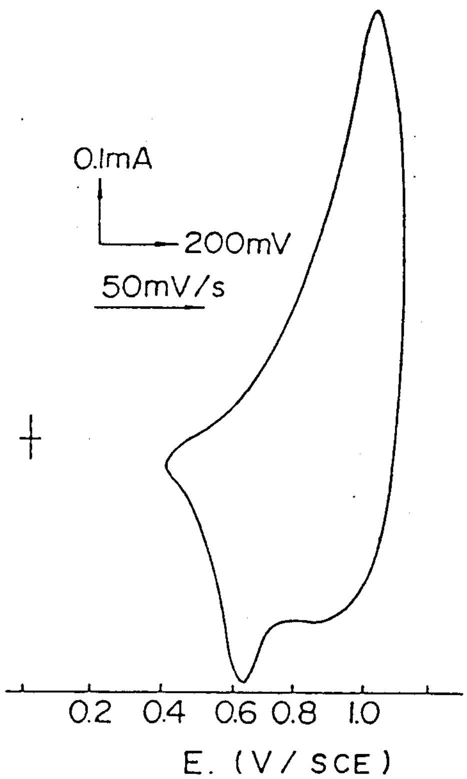
0.1mA
200mV
50mV/s
0.2 0.4 0.6 0.8 1.0
E. (V/SCE)

FIG.1

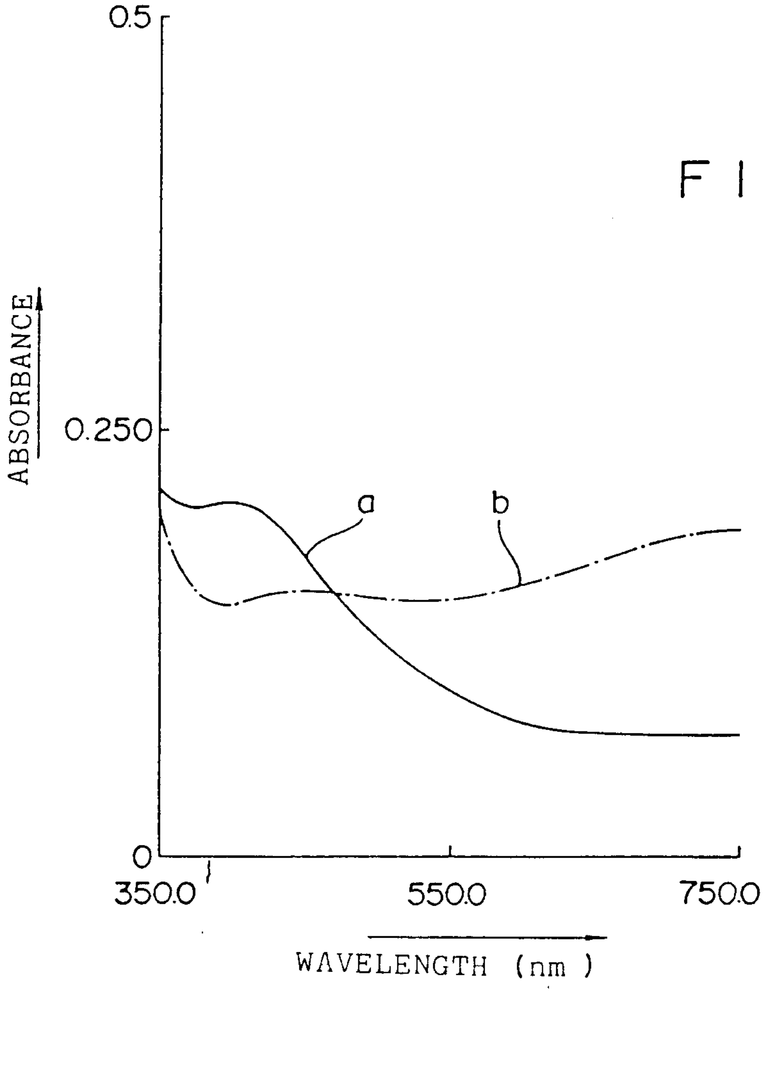
0.5
0.250
0
ABSORBANCE
a
b
350.0
550.0
750.0
WAVELENGTH (nm)

FIG.2

FIG.3

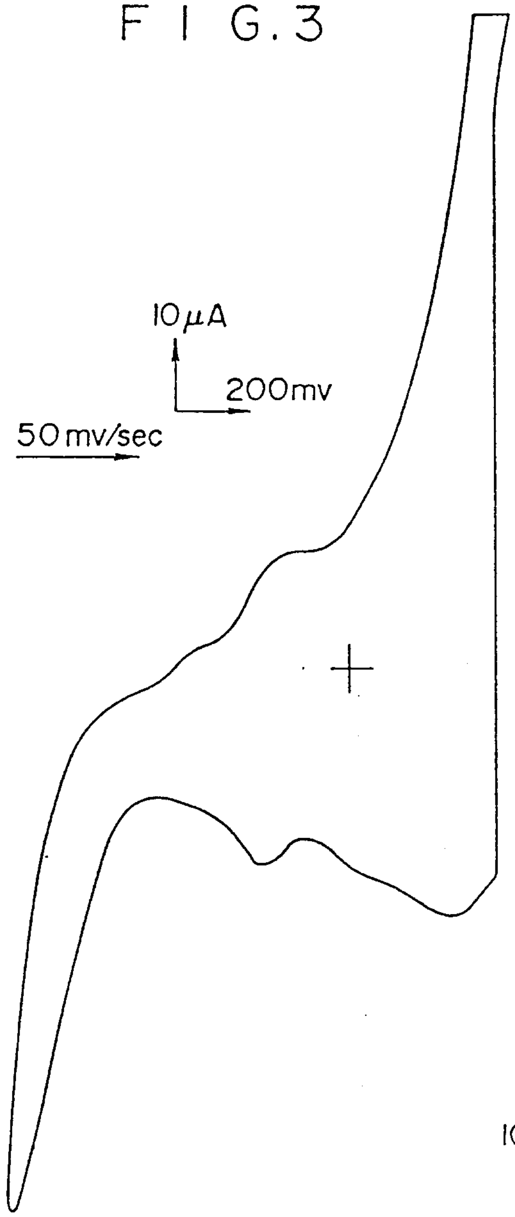


FIG.4

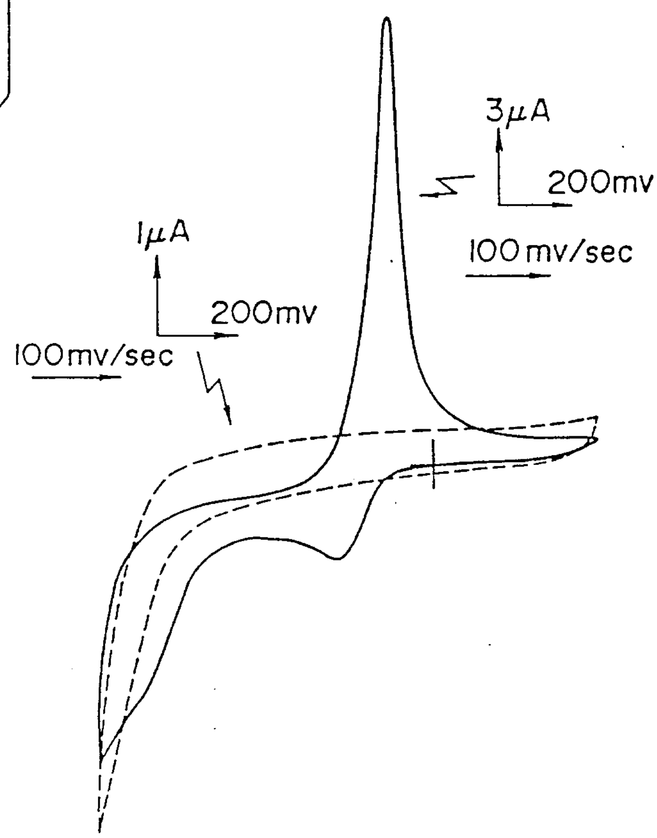

F I G. 5

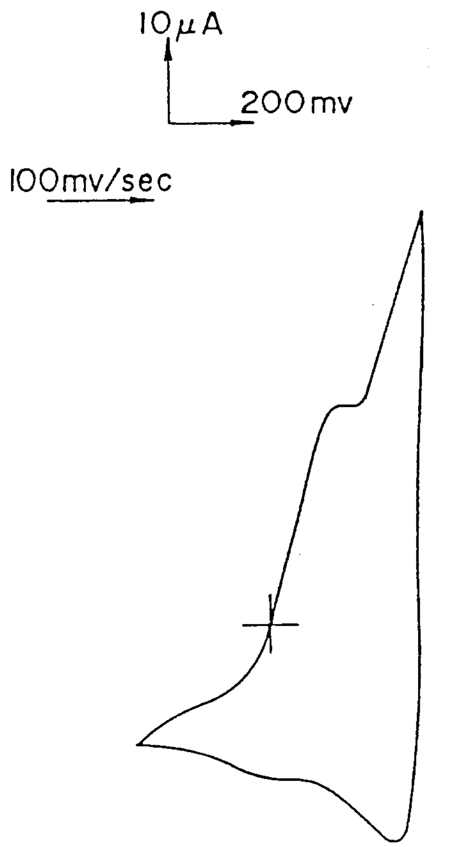


F I G. 6